Europäisches Patentamt

European Patent Office

Office européen des brevets

(11) Veröffentlichungsnummer: **0 563 415 A1**

## EUROPÄISCHE PATENTANMELDUNG

(21) Anmeldenummer: **92105472.2**

(51) Int. Cl.5: **H04L 12/56**, H04Q 3/68

(22) Anmeldetag: **30.03.92**

(43) Veröffentlichungstag der Anmeldung:
**06.10.93 Patentblatt 93/40**

(84) Benannte Vertragsstaaten:
**AT BE CH DE DK ES FR GB GR IT LI LU MC NL PT SE**

(71) Anmelder: **SIEMENS AKTIENGESELLSCHAFT**
**Wittelsbacherplatz 2**
**D-80312 München(DE)**

(72) Erfinder: **Fellinger, Frank, Dr.**
**Vohburgerstrasse 12**
**W-8000 München 21(DE)**

(54) **Koppelnetz für die Durchschaltung von digitalen Fernmeldeinformationen.**

(57) Es ist als 2-stufige gestreckte Anordnung mit k Koppelbausteinen (KBJ1 bis KBJK; KBE1 bis KBEK) je Stufe ausgebildet, die als Bestandteil der ersten Stufe jeweils N Eingänge und NxK Ausgänge und als Bestandteil der zweiten Stufe N x K Eingänge und N Ausgänge aufweist, wobei jeder Koppelbaustein der ersten Stufe mit jedem Koppelbaustein der zweiten Stufe über N Zwischenleitungen verbunden ist.

FIG 1

EP 0 563 415 A1

Die Erfindung betrifft ein Koppelnetz für die Durchschaltung von digitalen Fernmeldeinformationen, insbesondere im asynchronen Transfermodus (ATM-Modus) übertragenen Informationen, aus einer Mehrzahl von jeweils mehrere Eingänge und Ausgänge aufweisenden für sich blockierungsfrei durchschaltenden Koppelbausteinen.

Der Aufbau von Koppelnetzen aus Koppelbausteinen erfolgt im Hinblick auf die Möglichkeit einer schrittweisen Erweiterung auf große Anschlußzahlen, ohne daß schon in einem Grundaufbau entsprechende Vorleistungen zu erbringen sind. Als Konsequenz hieraus ergibt sich die Notwendigkeit eines mehrstufigen Koppelnetzaufbaus, bei dem die Koppelbausteine der einzelnen Koppelnetzstufen über Zwischenleitungen miteinander verbunden sind. Der mehrstufige Koppelnetzaufbau bringt die Möglichkeit der Einsparung an Durchschalteelementen (Koppelpunkte solcher Koppelbausteine) mit sich. Gegenübereinstufigen Koppelnetzen, bei denen von jedem Koppelnetzeingang jeder freie Koppelnetzausgang immer erreicht werden kann, besteht allerdings der Nachteil einer gewissen Blockierungswahrscheinlichkeit, indem unter Umständen ein freier Koppelnetzausgang deswegen nicht erreicht werden kann, weil zwischen den Koppelnetzstufen keine freie Zwischenleitung zur Verfügung steht.

Durch Steigerung der Stufenanzahl kann eine solche Blockierungswahrscheinlichkeit unter Inkaufnahme eines wieder steigenden Bedarfs an Koppelpunkten verringert werden.

In ATM-Fernmeldenetzen, in denen die Informationen in Form von Nachrichtenzellen übertragen werden, deren Nutzinformationsteil ein unter anderem Wegeinformationen enthaltender Kopfteil vorangestellt ist, wurde zur Verringerung der Blockierungswahrscheinlickeit der Koppelnetze darüber hinaus ein Wegesuch- und Wiederordnungsverfahren angewendet, demgemäß die zu einer sogenannten virtuellen Verbindung gehörenden ATM-Nachrichten-Zellen über verschiedene Wege durch das Koppelnetz geleitet werden und ausgangsseitig die beim Durchgang durch das Koppelnetz verloren gegangene zeitliche Reihenfolge der einzelnen Zellen wieder hergestellt wird. Hierzu müssen eingangsseitig des Koppelnetzes den einzelnen Zellen entsprechende Zeitmarken zugeordnet werden. Ein solches Verfahren ist steuerungsmäßig komplex, arbeitet nicht fehlerfrei und führt zu relativ langen Datenlaufzeiten.

Die Aufgabe der Erfindung besteht darin, ein insbesondere zur Durchschaltung von ATM-Informationen geeignetes Koppelnetz anzugeben, das bei ausreichendem Durchsatz auch ohne Maßnahmen der obengenannten Art blockierungsfrei arbeitet.

Diese Aufgabe wird durch die im Kennzeichen des Patentanspruchs angegebenen Merkmale gelöst.

Bei einem erfindungsgemäß ausgebildeten Koppelnetz sind demnach die Ausgänge der Koppelbausteine der eingangsseitigen Stufe und die Eingänge der Koppelbausteine der ausgangsseitigen Koppelbausteine derart weit aufgefächert und dementsprechend die Zwischenleitungsverbindungen zahlenmäßig derart erhöht, daß, sofern eine an den Ausgang eines Koppelbausteins der zweiten Stufe angeschlossene abgehende Übertragungsleitung für die Übertragung einer entsprechenden Informationsmenge zur Verfügung steht, diese Ausgangsleitung je nach dem gewählten Grad der Auffächerung mit großer Wahrscheinlichkeit oder aber blockierungsfrei über das Koppelnetz erreicht werden kann. Im Verkehrsverhalten entspricht das erfindungsgemäße Koppelnetz dann praktisch einer einstufigen Anordnung. Beim heutigen Stand der Technologie ist der mit diesem Konzept verbundene Aufwand für den Aufbau der Koppelbausteine (Anzahl der Koppelpunkte) ohne weiteres hinnehmbar.

Eine Anzahl weiterer Ausgestaltungen der Erfindung betrifft unterschiedliche Varianten eines derartigen Koppelnetzes im Hinblick auf die Verteilung der Funktionen der reinen räumlichen Durchschaltung und der Funktionen der Zwischenspeicherung, im Fall der ATM-Anwendung also der Warteschlagenpufferung, auf Koppelbausteine der ersten und der zweiten Koppelnetzstufe bzw. auf eine gegebenenfalls der zweiten Koppelnetzstufe nachgeschaltete reine Speicheranordnung.

Die Vorteile bzw. Einsatzmöglichkeiten dieser einzelnen Varianten hängen in erster Linie davon ab, in welchem Ausmaß das Koppelnetz aus typeneinheitlichen Koppelbausteinen bzw. Koppelelementen, aus denen solche Bausteine gebildet sind, aufgebaut werden soll.

Noch eine weitere Ausgestaltung betrifft einen typeneinheitlichen Aufbau der Koppelbausteine des gesamten Koppelnetzes aus Koppelelementen, die für sich sowohl eine räumliche Durchschaltung als auch eine Zwischenspeicherung bzw. Warteschlangenpufferung der durchgeschalteten Informationen bewirken können und bei denen die Anzahl der Eingänge und Ausgänge in einer festen Relation zueinander stehen.

Andere Ausgestaltungen betreffen die technologisch günstige Gestaltung der Koppelelemente in den Koppelbausteinen der ausgangsseitigen Koppelnetzstufe.

Nachstehend wird die Erfindung anhand von Ausführungsbeispielen unter Bezugnahme auf eine Zeichnung näher erläutert.

In der Zeichnung zeigen:
FIG 1 das Blockschaltbild eines erfindungsgemäßen Koppelnetzes.

Figuren 2 bis 4 Ausführungsvarianten des erfindungsgemäßen Koppelnetzes im Hinblick auf die Natur der Koppelbausteine in Form von reinen Raumkoppelbausteinen, kombinierten Raumkoppel-Speicherbausteinen und reinen Speicherbausteinen.

FIG 5 und 6 Ausführungsbeispiele der Ausführungsvariante gemäß Fig.4 unter Verwendung von gleichartigen sowohl eine räumliche Durchschaltung als auch eine Zwischen-bzw. Pufferspeicherung bewirkenden Koppelelementen.

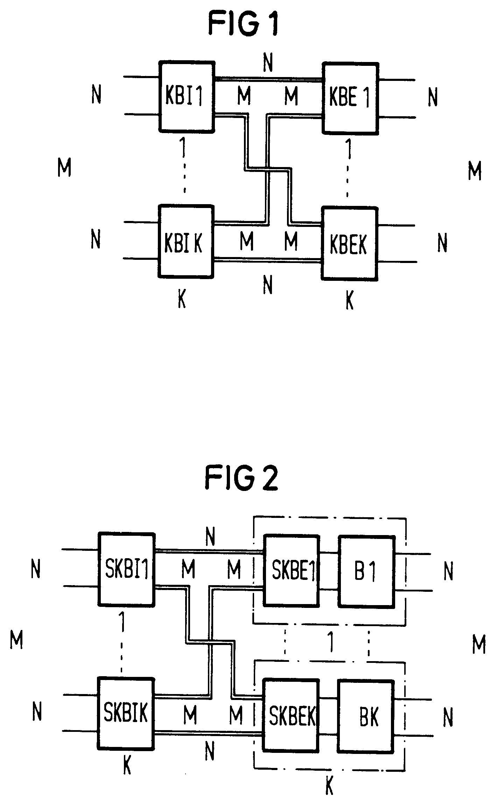

Das erfindungsgemäße Koppelnetz gemäß FIG 1 stellt eine zweistufige gestreckte Anordnung mit K Koppelbausteinen KBI1...KBIK in der eingangsseitigen Koppelstufe und K Koppelbausteinen KBE1..KBEK in der ausgangsseitigen Koppelstufe dar. In der ersten Koppelstufe sind an jeden der Koppelbausteine N Zubringerleitungen angeschlossen, an die Ausgänge der Koppelbausteine der zweiten Koppelstufe sind ebenfalls jeweils N abführende Ausgangsleitungen angeschlossen.

Die Koppelbausteine der ersten Stufe weisen jeweils $M = N \times K$ Ausgänge auf und die Koppelbausteine der zweiten Koppelstufe sind mit derselben Anzahl von Eingängen ausgestattet. Zwischen diesen Ausgängen der Koppelbausteine der ersten Stufe und den Eingängen der Koppelbausteine der zweiten Stufe bestehen Zwischenleitungsverbindungen und zwar derart, daß jeder Koppelbaustein der ersten Stufe mit jedem Koppelbaustein der zweiten Stufe über N Zwischenleitungen verbunden ist.

Aufgrund dieser Verhältnisse kann eine freie Ausgangsleitung unter allen Umständen erreicht werden, die Anordnung arbeitet also blockierungsfrei.

Eine solche blockierungsfreie Arbeitsweise wird man vorsehen, wenn Fernsprechinformationen durchzuschalten sind. Bei reinem Datenverkehr mit der Möglichkeit der Datenwiederholung kann unter bestimmten Umständen gezielt eine gewisse geringe Verlustwahrscheinlichkeit zugelassen werden, indem eine etwas geringere Aufspreizung der Ausgänge der eingangsseitigen Koppelbausteine bzw. der Eingänge der ausgangsseitigen Koppelbausteine vorgesehen wird.

Bei der Ausführungform gemäß FIG 2 sind die Koppelbausteine SKBI1...SKBIK bzw. SKBE1...SKBEK reine Raumkoppelstufen, in denen also keine Pufferspeicherung stattfinden kann. Den Koppelbausteinen SKBE1...SKBEK der zweiten Stufe sind im dargestellten Fall jeweils Pufferspeicher B1...BK zugeordnet, die jeweils N Eingänge und Ausgänge aufweisen und die im Falle einer ATM-Anwendung die Warteschlagenverzögerung bewirken.

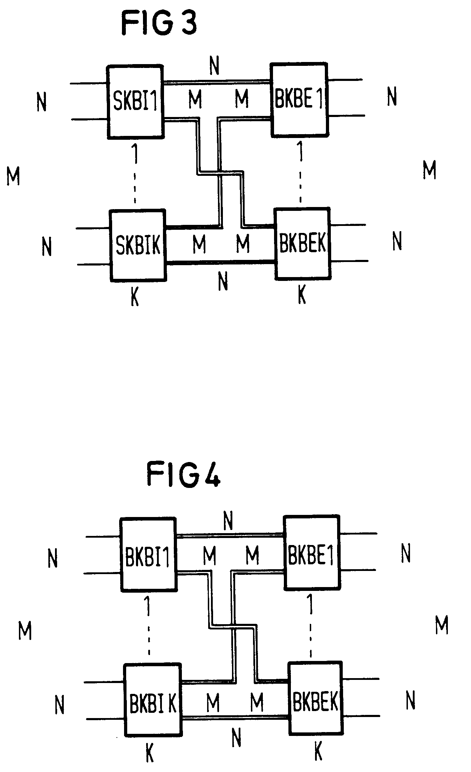

Bei der Ausführungsvariante gemäß FIG 3 sind die Koppelbausteine SKBI1...SKBIK der ersten Koppelnetzstufe ebenfalls reine Raumkoppelstufen, wogegen es sich bei den Koppelnetzbausteinen BKBE1...BKBEK der zweiten Koppelnetzstufe um solche handelt, mit deren Hilfe sich eine räumliche Vermittlung bewirken läßt und die außerdem einen Warteschlangenpufferspeicher enthalten.

Bei der Ausführungsform gemäß FIG 4 schließlich sind beide Koppelnetzstufen aus Koppelbausteinen BKBI1...BKBIK bzw. BKBE1 bis BKBEK aufgebaut, die sowohl eine räumliche Vermittlung bewirken als auch zur Warteschlagenpufferung herangezogen werden können.

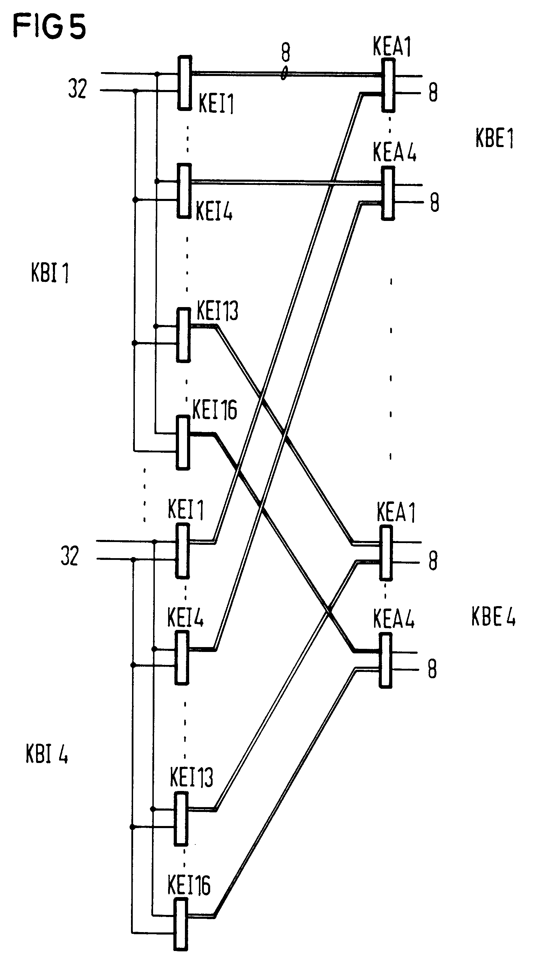

In der Figur 5 ist eine erste Ausführungsform der Koppelnetzvariante gemäß FIG 4 näher dargestellt. Es handelt sich hier um ein Koppelnetz mit 128 Anschlüssen für z.B. jeweils ein die STM-4-Signal eines Multiplexschemas der Synchron-Digital-Hierarchie.

Es besteht aus vier Koppelbausteinen je Koppelnetzstufe, an die jeweils $N = 32$ Zubringerleitungen bzw. wegführende Leitungen angeschlossen sind.

Die Koppelbausteine beider Koppelstufen bestehen aus gleichartigen Koppelelementen mit jeweils 32 Eingängen und 8 Ausgängen. Die Koppelbausteine der ersten Stufe sind aus jeweils 16 Koppelelementen KEI1...KEI16 aufgebaut, die eingangsseitig zur Bildung von $N = 32$ Eingängen je Koppelbaustein parallel

Die Koppelbausteine der zweiten Stufe umfassen jeweils vier solcher Koppelelemente KEE1...KEE4, die also insgesamt 32 Ausgänge je Koppelbaustein bilden. Die Zwischenleitungsverbindung in Form von $N = 32$ Zwischenleitungen zwischen jedem Koppelbaustein der ersten Stufe und jedem Koppelbaustein der zweiten Stufe ist in der Weise vorgenommen, daß die Ausgänge von Vierergruppen von Koppelelementen der Koppelbausteine der ersten Stufe jeweils mit den 32 Eingängen eines Koppelelementes eines Koppelbausteins der zweiten Stufe verbunden sind. So bestehen also beispielsweise zwischen den Ausgängen der ersten vier Koppelelemente KEI1...KEI4 des Koppelbausteins KBI1 der ersten Stufe und den vier Koppelelementen KEE1...KEE4 des ersten Koppelbausteins KBE1 der zweiten Koppelnetzstufe jeweils acht Zwischenleitungsverbindungen.

Die Ausgänge der hier nicht dargestellten nächsten vier Koppelelemente des ersten Koppelfeldbausteins KBI1 sind mit acht Eingängen jeweils eines anderen Koppelelementes des zweiten, hier ebenfalls nicht dargestellten Koppelbausteins der zweiten Stufe verbunden. Schließlich besteht zwischen den letzten vier Koppelelementen KEI13 bis KEI16 des ersten Koppelbausteins KBI1 und den vier Koppelelementen des vierten Koppelbausteins KBEI4 der zweiten Stufe eine jeweils acht Leitungen umfassende Zwischenleitungsverbindung.

In entsprechender Weise bestehen Zwischenleitungsverbindungen zwischen Viergruppen der übrigen Koppelbausteine KBI2...KBI4 und weiteren Eingängen der Koppelelemente KEE1...KEE4 der Koppelbausteine KBE1...KBE4 der zweiten Stufe. In der Figur gezeigt sind jeweils acht Zwischenleitungen umfassende Verbindungen zwischen den ersten vier Koppelelementen KEI1...KEI4 des vierten Koppelbausteins KBI4 und den jeweils letzten der 32 Eingänge der Koppelelemente KEE1...KEE4 des ersten Koppelbausteins KBE1 der zweiten Stufe bzw. Verbindungen zwischen den Ausgängen der letzten vier Koppelelemente KEI13 bis KEI16 und den jeweils letzten 32 Eingängen der Koppelelemente KEE1...KEE4 des letzten Koppelbausteins KBE4 der zweiten Stufe.

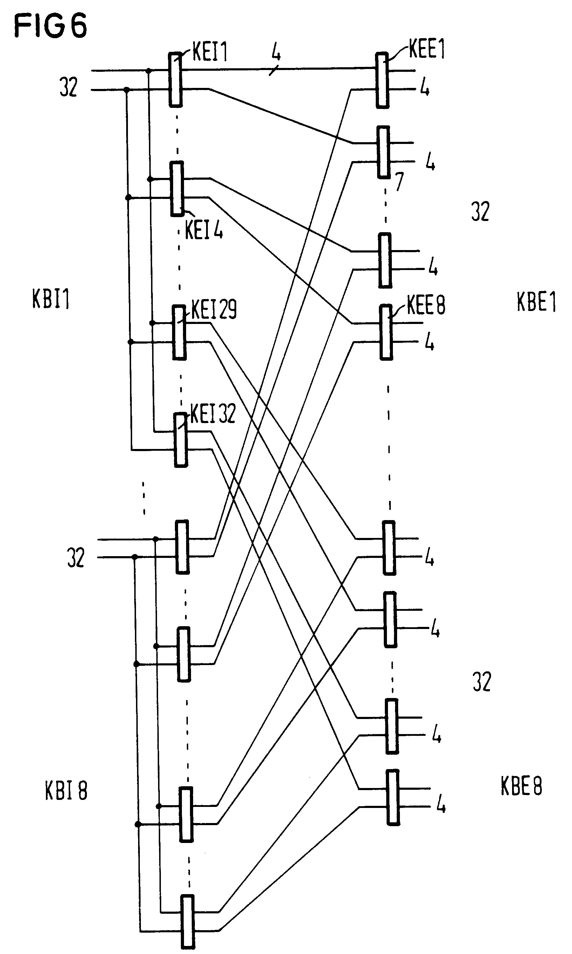

Die Ausführungsform gemäß FIG 6 weist 256 Anschlüsse auf und ist ebenfalls unter Verwendung von Koppelelementen KE aufgebaut, die 32 Eingänge und 8 Ausgänge haben. Die erste Koppelnetzstufe umfaßt acht Koppelbausteine KBI1 bis KBI8, die jeweils aus 32 solcher Koppelelemente KEI1...KEI32 gebildet sind, deren Eingänge wie beim vorstehend beschriebenen Beispiel zur Bildung von 32 Leitungsanschlüssen je Koppelbaustein parallel geschaltet sind. Die acht Koppelbausteine der zweiten Stufe umfassen jeweils acht solcher Koppelelemente KEE1...KEE8, von deren Ausgängen jedoch jeweils nur vier zur Bildung von nur insgesamt 32 Ausgängen je Koppelbaustein ausgenutzt sind. Die Zwischenleitungsverbindungen in Form von N = 32 Zwischenleitungen zwischen jedem Koppelbaustein der ersten Stufe und jedem Koppelbaustein der zweiten Stufe unterscheiden sich von derjenigen des vorbeschriebenen Beispiels dadurch, daß jeweils zwischen einem bestimmten Koppelelement der ersten Stufe und einem bestimmten Koppelelement der zweiten Stufe nur vier Zwischenleitungsverbindungen bestehen und demnach die Koppelelemente KEI der ersten Stufe jeweils mit zwei Koppelelementen KEE der zweiten Stufe über Zwischenleitungen verbunden sind.

Ein Koppelnetz dieses Ausmasses kommt in erster Linie für den Einsatz in Cross-Connectoren in Frage.

Wegen der erfindungsgemäß großen Aufspreizung der Ausgänge der Koppelbausteine der ersten Koppelnetzstufe bzw. der Eingänge der Koppelbausteine der zweiten Koppelnetzstufe, wodurch für jede mögliche Verbindung ein Zwischenleitungsweg zur Verfügung steht, ist eine Warteschlangenverzögerung in der ersten Koppelnetzstufe vernachlässigbar klein. Es werden daher bei den Ausführungsvarianten, bei denen auch die Koppelbausteine bzw. Koppelelemente der ersten Koppelnetzstufe sowohl eine räumliche Durchschaltung als auch eine Pufferspeicherung vornehmen können, die Pufferspeicher in erster Linie zur Erzielung eines gegebenenfalls erforderlichen Phasenausgleichs ausgenutzt, sofern dies erforderlich ist. Die Verwendung solcher Koppelelemente in der ersten Koppelnetzstufe, die auch eine Pufferspeicherung bewirken könnten, erfolgt hier außerdem im Interesse eines typeneinheitlichen Aufbaus des Koppelnetzes.

Der Speicherraum, der mit Koppelelementen der ausgangsseitigen Koppelnetzstufe in Zusammenhang steht, kann auf verschiedene Weise organisiert sein. Es kann je Koppelelement ein Speicher vorhanden sein, der in Teilbereiche unterteilt ist, die individuell den einzelnen Koppelelementausgängen zugeordnet sind. Alternativ hierzu kann der zu einem Koppelelement gehörende Speicher nicht unterteilt und damit allen Koppelelementausgängen zur besseren Nutzung gemeinsam zugeordnet sein.

Wenn wie oben angegeben die Koppelbausteine nur eine räumliche Durchschaltung bewirken können und demnach die Koppelelemente, aus denen solche Bausteine gebildet sind, keinen internen Speicher aufweisen kann die Zuordnung der in einem solchen Fall der ausgangsseitigen Koppelnetzstufe nachgeschalteten Speicheranordnung aus Teilen bestehen, die entweder jeweils einem Koppelelement, einer Gruppe von Koppelelementen oder aber einem Koppelbaustein zugeordnet sind.

Das erfindungsgemäße Koppelnetz, das wie eingangs ausgeführt, im wesentlichen als Alternative bekannter ATM-Koppelnetze gedacht ist, kann aber auch zur Durchschaltung von im synchronen Transfermodus (STM) übertragenen Informationen Verwendung finden. Die vorerwähnten Pufferspeicher, durch die eine Warteschlangenverzögerung bewirkt werden kann, müssen dann entsprechend durch Zeitstufenspeicher ersetzt werden.

Beim Betrieb der beschriebenen Koppelnetze in ATM-Vermittlungen oder ATM-Crossconnectoren wird die Wegeinstellung für virtuelle Verbindungen in den Koppelnetzen vorgeschalteten Anschlußeinheiten vorgenommen, über die die Eingangsleitungen an die Koppelnetze herangeführt sind. Es werden dabei die in einem Kopfteil der ATM-Zellen enthaltenen Wegeinformationen ausgewertet und Wegeinstellinformationen erzeugt, die in einem zusätzlichen Kopfteil der ATM-Zellen untergebracht werden und beim Durchlaufen der einzelnen Koppelelemente ausgewertet werden und so die Zellen zum gewünschten Koppelfeldausgang führen.

**Patentansprüche**

1. Koppelnetz für die Durchschaltung von digitalen Fernmeldeinformationen, insbesondere im asynchronen Transfermodus (ATM-Modus) übertragenen Informationen, aus einer Mehrzahl von jeweils mehrere Eingänge und Ausgänge aufweisenden für sich blockierungsfrei durchschaltenden Koppelbausteinen,
**dadurch gekennzeichnet,**
daß es als 2-stufige gestreckte Anordnung mit jeweils K Koppelbausteinen (KBI1...KBIK; KBE1...KBEK) in jeder Stufe ausgebildet ist, bei der die Koppelbausteine (KBI1...KBIK) der ersten Stufe, an deren jeweils N Eingänge die Informationen anliefernden Eingangsleitungen angeschlossen sind, zumindest nahezu M = N x K Ausgänge und die Koppelbausteine (KBE1...KBEK) der zweiten Stufe, an deren jeweils N Ausgänge die Informationen abführenden Ausgangsleitungen angeschlossen sind, jeweils zumindest nahezu M = N x K Eingänge aufweisen, wobei jeder Koppelbaustein (KBI1...KBIK) der ersten Stufe über wenigstens N Zwischenleitungen mit jedem Koppelbaustein (KBE1...KBEK) der zweiten Stufe verbunden ist.

2.    Koppelnetz nach Anspruch 1,
**dadurch gekennzeichnet,**
daß zur Bildung der beiden Stufen Koppelbausteine (SKBI, SKBE) verwendet sind, die lediglich eine räumliche Durchschaltung bewirken, ohne eine Zwischenspeicherung der durchzuschaltenden Informationen vornehmen zu können, und daß der zweiten Stufe eine Zweichenspeicheranordnung nachgeschaltet ist, die aus den Eingängen der Koppelbausteine der zweiten Stufe individuell (B1...BK) oder gruppenweise zugordneten Teilspeichern gebildet wird. (Fig.2).

3.    Koppelnetz nach Anspruch 1,
**dadurch gekennzeichnet,**
daß zur Bildung der ersten Stufe Koppelbausteine (SKBI) verwendet sind, die lediglich eine räumliche Durchschaltung bewirken, ohne eine Zwischenspeicherung der Informationen vornehmen zu können, und daß zur Bildung der zweiten Stufe Koppelbausteine (BKBE) verwendet sind, die sowohl eine räumliche Durchschaltung als auch eine Zwischenspeicherung der durchzuschaltenden Informationen bewirken können. (Fig. 3).

4.    Koppelnetz nach Anspruch 1,
**dadurch gekennzeichnet,**
daß zur Bildung beider Stufen Koppelbausteine (BKBI, BKBE) verwendet sind, die sowohl eine räumliche Durchschaltung als auch eine Zwischenspeicherung der durchzuschaltenden Informationen bewirken können. (Fig. 4).

5.    Koppelnetz nach Anspruch 4,
**dadurch gekennzeichnet,**
daß die Koppelbausteine jeweils aus einer Mehrzahl von N Eingänge und m Ausgänge aufweisenden Koppelelementen (KEI, KEE) bestehen, wobei die K Koppelbausteine (KBI) der eingangsseitigen Stufe (KxN)/m solcher Koppelelemente enthalten, deren Eingänge jeweils mit gleichgeordneten Eingängen der übrigen Koppelelemente verbunden sind und die Eingänge des betreffenden Koppelbausteins (KBI) bilden und wobei die Koppelbausteine (KBE) der ausgangsseitigen Stufe jeweils (K) Koppelelemente (KEE, KEA) aufweisen, bei denen jeweils N/K Ausgänge ausgenutzt sind, die die Ausgänge des betreffenden Koppelbausteins (KBE) bilden.

6.    Koppelnetz nach Anspruch 2 und 5,
**dadurch gekennzeichnet,**
daß die den Koppelbausteinen der zweiten Koppelnetzstufe zugeordnete Zwischenspeicheranordnung aus den diese Koppelbausteine bildenden Koppelelementen individuell zugeordneten Teilspeichern oder Gruppen solcher Koppelelemente zugeordneten Teilspeichern besteht.

7.    Koppelnetz nach den Ansprüchen 3 und 5 oder 4 und 5,
**dadurch gekennzeichnet,**
daß die Koppelelemente der ausgangsseitigen Koppelbausteine jeweils einen Zwischenspeicher mit ausgangsindividuellen Teilbereichen oder einen Zwischenspeicher aufweisen, der ihren Ausgängen gemeinschaftlich zugeordnet ist.

EP 0 563 415 A1

# FIG 1

# FIG 2

## FIG 3

## FIG 4

FIG 5

FIG 6

**Europäisches Patentamt**

**EUROPÄISCHER RECHERCHENBERICHT**

Nummer der Anmeldung

EP 92 10 5472

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | JOURNAL OF PARALLEL AND DISTRIBUTED COMPUTING Bd. 1, Nr. 1, August 1984, DULUTH, MN US Seiten 81 - 103 M. KUMAR ET AL 'Performance Enhancement in Buffered Delta Networks Using Crossbar Switches and Multiple Links' * Seite 94, Zeile 12 - Zeile 13; Abbildung 8 * * Seite 95, Zeile 9 - Seite 96, Zeile 3; Abbildung 11 * | 1,4,5 | H04L12/56 H04Q3/68 |
| Y | --- | 2,3,6,7 | |
| X | IEEE TRANSACTIONS ON COMMUNICATIONS Bd. 31, Nr. 1, Januar 1983, NEW YORK US Seiten 2 - 9 A. JAJSZCZYK 'On Nonblocking Switching Networks Composed of Digital Symmetrical Matrices' * Seite 3, linke Spalte, Zeile 3 - Zeile 4; Abbildung 1 * --- | 1,4 | |
| Y | IEEE INFOCOM '88 März 1988, NEW ORLEANS US Seiten 334 - 343 M. G. HLUCHYJ ET AL. 'Queueing in Space-Division Packet Switching' * Abbildungen 2C,2D * --- | 2,3,6,7 | **RECHERCHIERTE SACHGEBIETE (Int. Cl.5)** H04L H04Q |
| A | NTZ NACHRICHTENTECHNISCHE ZEITSCHRIFT Bd. 43, Nr. 11, November 1990, BERLIN DE Seiten 810 - 815 D. BÖTTLE ET AL. 'Flexibles ATM-Koppelfeldkonzept für die Breitbandkommunikation' * Seite 814, linke Spalte, Zeile 32 - rechte Spalte, Zeile 41 * ----- | 1,4,6,7 | |

Der vorliegende Recherchenbericht wurde für alle Patentansprüche erstellt

| Recherchenort | Abschlußdatum der Recherche | Prüfer |
|---|---|---|
| DEN HAAG | 26 NOVEMBER 1992 | MIKKELSEN C. |